# EUROPEAN PATENT APPLICATION

(11) **EP 4 089 600 A1**
(43) Date of publication of application: **16.11.2022**
(21) Application number: 21172962.9
(22) Date of filing: 10.05.2021
(51) Int. Cl.: G06Q 10/06

(54) **DETERMINING A SLEEP SCHEDULE**

(71) Applicant: Koninklijke Philips N.V., 5656 AG Eindhoven (NL)
(72) Inventor: VAN EE, Raymond, 5656 AE Eindhoven (NL); WESTERINK, Joanne Henriëtte Desirée Monique, 5656 AE Eindhoven (NL); LEUFKENS, Timmy Robertus Maria, 5656 AE Eindhoven (NL); PFUNDTNER, Stefan, 5656 AE Eindhoven (NL); WEYSEN, Tim, 5656 AE Eindhoven (NL); MENA BENITO, Maria Estrella, 5656 AE Eindhoven (NL)
(74) Representative: Philips Intellectual Property & Standards

(57) **Abstract**

According to an aspect, there is provided a computer-implemented method for determining a sleep schedule (20; 40; 60) for a subject. The method comprises obtaining (101) information indicating a shift working pattern for the subject, the shift working pattern comprising at least one night shift, information indicating a required duration of sleep for the subject, and information relating to any personal activities to be undertaken by the subject during the day before or day after the at least one night shift. The method also comprises analyzing (103) the obtained information to determine a sleep schedule (20; 40; 60) for the subject. The sleep schedule (20; 40; 60) comprises two or more sleep windows in the day before or day after the at least one night shift in which the subject is to sleep, with the two or more sleep windows being scheduled according to the required duration of sleep for the subject and according to any personal activities to be undertaken by the subject.

## Description

### FIELD OF THE INVENTION

This disclosure relates to determining a sleep schedule for a subject, and in particular relates to a computer-implemented method, an apparatus and a computer program product for determining a sleep schedule for a subject who works night shifts.

### BACKGROUND OF THE INVENTION

People who work according to a shift pattern (referred to herein as "shift workers") that includes one or more shifts at night tend to be frequently or continually sleep-deprived. It is difficult for night shift workers to get enough sleep during the day. They typically get a daily average of two to four hours less sleep than normal, and it can be hard for them to fall asleep during the day. Furthermore, working in a shift schedule often means that a person is out of sync with the normal daily activities of (other) family members and friends. Shift workers feel like they have little control over their sleep routines and quality time with their family. As a result, they can feel alone and misunderstood by family and friends, and experience sleep issues related to their career, hobby, and family. Thus, besides health and physical symptoms and sleep problems, shift work can lead to social and personal problems.

Therefore there is an unmet need to optimize a total daily sleep duration and sleep quality for shift workers, while maximizing their involvement in a normal social and family life.

### SUMMARY OF THE INVENTION

According to a first specific aspect, there is provided a computer-implemented method for determining a sleep schedule for a subject. The method comprises obtaining information indicating a shift working pattern for the subject, the shift working pattern comprising at least one night shift, information indicating a required duration of sleep for the subject, and information relating to any personal activities to be undertaken by the subject during the day before or day after the at least one night shift. The method also comprises analyzing the obtained information to determine a sleep schedule for the subject. The sleep schedule comprises two or more sleep windows in the day before or day after the at least one night shift in which the subject is to sleep, with the two or more sleep windows being scheduled according to the required duration of sleep for the subject and according to any personal activities to be undertaken by the subject. Therefore the method provides a way to optimize a total daily sleep duration and sleep quality for shift workers while enabling their involvement in a normal social and family life.

According to a second aspect, there is provided a computer program product comprising a computer readable medium having computer readable code embodied therein. The computer readable code is configured such that, on execution by a suitable computer or processor, the computer or processor is caused to perform the method according to the first aspect or any embodiment thereof.

According to a third aspect, there is provided an apparatus configured to determine a sleep schedule for a subject. The apparatus comprises a processing unit that is configured to obtain information indicating a shift working pattern for the subject, the shift working pattern comprising at least one night shift, information indicating a required duration of sleep for the subject, and information relating to any personal activities to be undertaken by the subject during the day before or day after the at least one night shift; and analyze the obtained information to determine a sleep schedule for the subject, wherein the sleep schedule comprises two or more sleep windows in the day before or day after the at least one night shift in which the subject is to sleep, wherein the two or more sleep windows are scheduled according to the required duration of sleep for the subject and according to any personal activities to be undertaken by the subject. Therefore the method provides a way to optimize a total daily sleep duration and sleep quality for shift workers while enabling their involvement in a normal social and family life.

These and other aspects will be apparent from and elucidated with reference to the embodiment(s) described hereinafter.

### BRIEF DESCRIPTION OF THE DRAWINGS

Exemplary embodiments will now be described, by way of example only, with reference to the following drawings, in which:
Fig. 1 is a block diagram of a system for determining a sleep schedule according to embodiments of the techniques described herein;
Fig. 2 is an illustration of three exemplary sleep schedules determined according to embodiments of the techniques described herein; and
Fig. 3 is a flow chart illustrating a method of determining a sleep schedule according to embodiments of the techniques described herein.

### DETAILED DESCRIPTION OF EMBODIMENTS

An approach for the improvement or optimization of the balance between sleep and their normal family and/or social life for shift workers is provided herein. The proposed techniques can be implemented using a smartphone or other computer or computing device, and improve or optimize total daily sleep duration and sleep quality by determining and optimizing the timing (scheduling) and durations of multiple daily sleep windows. The timing/scheduling of the sleep windows can take into account family and/or social life context information, for example a social agenda relating to family, career and/or hobbies. Information on the determined timing/scheduling of the multiple sleep windows can be communicated to the subject to enable the subject to sleep at the appropriate times.

Embodiments of the disclosed techniques use one or more information collection units (e.g. including sensors) that gather information about the subject (i.e. the shift worker). The collected data can relate to objective and/or subjective parameters that are useful for establishing an insight into the subject's actual sleep timing, and the amount of sleep actually needed by the subject. A detected discrepancy between these measures can serve as a target for an intervention. As an example, when the subjective and/or objective measures report or indicate a Total Sleep Time (TST) of a specific sleep window below a target duration, advice, instructions and/or coaching can be offered or provided to the subject with the aim for the subject to gain more sleep. Such advice, instructions or coaching can be based on methods from Cognitive Behavioral Therapy (CBT) aimed at improving sleep duration. Alternatively, when the actual sleep target is met (as measured objectively), but the subject still considers that the sleep target is not met (for example the subject can report a TST that is 30 minutes shorter than the measured TST), advice, instructions or coaching can be provided to the subject that aims to improve the subject's satisfaction with the sleep target, for example by providing the subject with trust in their own sleep by displaying objective measures relating to their actual sleep sessions.

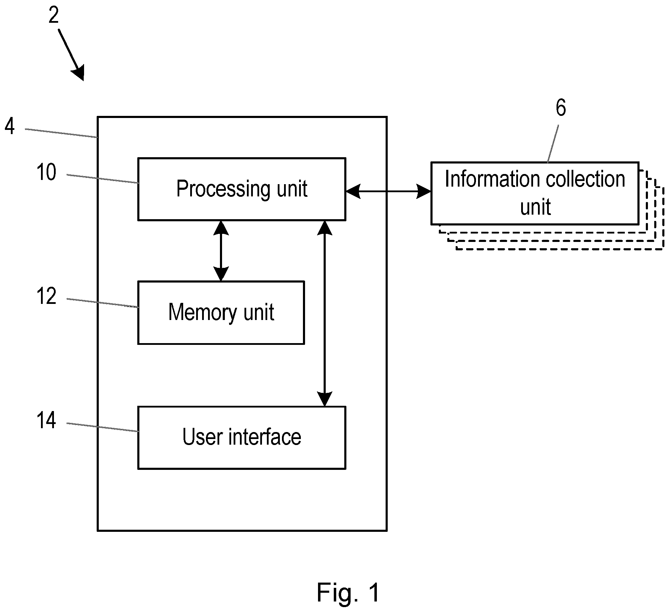

Fig. 1 shows a system 2 according to embodiments of the techniques described herein. The system 2 comprises an apparatus 4 and one or more information collection units 6 for collecting information about the subject. The collected information is provided to a processing unit 10 of the apparatus 4 for analysis to determine a sleep schedule comprising multiple sleep windows according to the techniques described herein. Although the information collection units 6 are all shown as being separate from the apparatus 4, it will be appreciated that in some embodiments one or more (or all) of the information collection units 6 can be integral with the apparatus 4, while one or more (or none) of the information collection units 6 are separate from the apparatus 4.

The information collection units 6 can comprise one or more sensors, as described further below. In addition or alternatively, the information collection units 6 can comprise one or more units or (e.g. software) modules that are able to interface with existing electronic or digital information relating to the subject, such as a calendar or diary that includes information about the subject's shift pattern(s), current sleep patterns, family activities, hobbies/sports and/or social events. Collectively, family activities, hobbies/sports and/or social events are referred to herein as "personal activities". Other information that can be collected by the information collection units 6 includes information about current sleep patterns (i.e. information about the sleep pattern or sleep sessions of the subject over some preceding period of time, such as a few days and/or weeks) and/or desired sleep patterns. In the case of the current sleep patterns, in some embodiments this information can be determined by the apparatus 4 based on information collected by the one or more information collection units 6.

It will be appreciated that, in some embodiments, some or all of the above information (particularly information about the subject's shift pattern(s), current sleep patterns, desired sleep patterns, family activities and/or social events) can be input to the apparatus 4 manually by the subject, and the information collection units 6 can be formed accordingly to collect or request that information from the subject.

It will be appreciated that, depending on the type(s) of information collection units 6 present or used in the system 2, the information collection units 6 may all be separate from each other, and/or one or more of the information collection units 6 can be integrated into a single device or (e.g. software) module. For example one type of information collection unit 6 can be a sensor that is to be worn by the subject, such as a heart rate monitor, another type of information collection unit 6 may be a sensor that is located or positioned in the subject's home environment or vehicle, such as an environmental temperature sensor or an alertness sensor (for example for monitoring the subject's alertness while driving), or a movement/motion sensor integrated into the subject's bed, and another type of information collection unit 6 may be a software module that operates in the subject's smartphone or in conjunction with one or more online accounts or profiles of the subject to read calendar or schedule information. Further examples of the one or more information collection units 6 are provided below.

The apparatus 4 includes a processing unit 10 that controls the operation of the apparatus 4 and that can be configured to execute or perform the methods described herein. The processing unit 10 can analyze the information collected by the information collection units 6 to determine a sleep schedule comprising multiple sleep windows. The processing unit 10 can be implemented in numerous ways, with software and/or hardware, to perform the various functions described herein. The processing unit 10 may comprise one or more microprocessors or digital signal processors (DSPs) that may be programmed using software or computer program code to perform the required functions and/or to control components of the processing unit 10 to effect the required functions. The processing unit 10 may be implemented as a combination of dedicated hardware to perform some functions (e.g. amplifiers, pre-amplifiers, analog-to-digital convertors (ADCs) and/or digital-to-analog convertors (DACs)) and a processor (e.g., one or more programmed microprocessors, controllers, DSPs and associated circuitry) to perform other functions. Examples of components that may be employed in various embodiments of the present disclosure include, but are not limited to, conventional microprocessors, DSPs, application specific integrated circuits (ASICs), field-programmable gate arrays (FPGAs), hardware for implementing a neural network and/or so-called artificial intelligence (AI) hardware accelerators (i.e. a processor(s) or other hardware specifically designed for AI applications that can be used alongside a main processor).

The processing unit 10 is connected to a memory unit 12 that can store data, information and/or signals for use by the processing unit 10 in controlling the operation of the apparatus 4 and/or in executing or performing the methods described herein. The memory unit 12 may store the information collected by the one or more information collection units 6. In some implementations the memory unit 12 stores computer-readable code that can be executed by the processing unit 10 so that the processing unit 10 performs one or more functions, including the methods described herein. In particular embodiments, the program code can be in the form of an application for a smartwatch, smartphone, tablet, laptop or computer. The memory unit 12 can comprise any type of non-transitory machine-readable medium, such as cache or system memory including volatile and non-volatile computer memory such as random access memory (RAM), static RAM (SRAM), dynamic RAM (DRAM), read-only memory (ROM), programmable ROM (PROM), erasable PROM (EPROM) and electrically erasable PROM (EEPROM), and the memory unit 12 can be implemented in the form of a memory chip, an optical disk (such as a compact disc (CD), a digital versatile disc (DVD) or a Blu-Ray disc), a hard disk, a tape storage solution, or a solid state device, including a memory stick, a solid state drive (SSD), a memory card, etc.

In some embodiments, the apparatus 4 comprises a user interface 14 that includes one or more components that enables a user of apparatus 4 (e.g. the subject/shift worker) to input information, data and/or commands into the apparatus 4, and/or enables the apparatus 4 to output information or data to the user of the apparatus 4. Information that can be output by the user interface 14 can include any of: information on the determined timing/scheduling of the multiple sleep windows; reminders to start and/or end a sleep window; advice, instructions or coaching to improve sleep duration and/or quality; advice, instructions or coaching to improve the subject's satisfaction with the sleep target; objective measures relating to the subject's actual sleep session(s); etc. The user interface 14 can comprise any suitable input component(s), including but not limited to a keyboard, keypad, one or more buttons, switches or dials, a mouse, a track pad, a touchscreen, a stylus, a camera, a microphone, etc., and/or the user interface 14 can comprise any suitable output component(s), including but not limited to a display screen, one or more lights or light elements, one or more loudspeakers, a vibrating element, etc.

In some embodiments, the apparatus 4 can comprise interface circuitry (not shown in Fig. 1). The interface circuitry can be for enabling a data connection to and/or data exchange with other devices, including any one or more of the information collection units 6. The connection may be direct or indirect (e.g. via the Internet), and thus the interface circuitry can enable a connection between the apparatus 4 and a network (such as the Internet), or directly between the apparatus 4 and the information collection units 6, via any desirable wired or wireless communication protocol. For example, the interface circuitry can operate using WiFi, Bluetooth, Zigbee, or any cellular communication protocol (including but not limited to Global System for Mobile Communications (GSM), Universal Mobile Telecommunications System (UMTS), Long Term Evolution (LTE), LTE-Advanced, etc.). In a particular example, the interface circuitry can enable the apparatus 4 and the information collection units 6 to communicate using a short-range communication protocol, such as WiFi, Bluetooth or Zigbee. In another particular example, in the case of a wired connection, the interface circuitry may include a socket or plug to enable a wired connection with the one or more information collection units 6, such as a USB plug or socket. In the case of a wireless connection, the interface circuitry (and thus apparatus 4) may include one or more suitable antennas for transmitting/receiving over a transmission medium (e.g. the air). The interface circuitry may be part of or connected to the processing unit 10 to enable information or data received by the interface circuitry to be provided to the processing unit 10, and/or information or data from the processing unit 10 to be transmitted by the interface circuitry.

It will be appreciated that a practical implementation of an apparatus 4 may include additional components to those shown in Fig. 1. For example, the apparatus 4 may also include a power supply, such as a battery, or components for enabling the apparatus 4 to be connected to a mains power supply. The apparatus 4 may also include interface circuitry for enabling a data connection to and/or data exchange with other devices, including any one or more of the information collection units 6, or other servers, databases and/or user devices.

The apparatus 4 may be in the form of, or be part of, a computing device, such as a server, desktop computer, laptop, tablet computer, smartphone, smartwatch, etc., or other types of device typically found in a subject's home environment.

As noted above, the one or more information collection units 6 can include one or more sensors. The sensors can measure any parameters suitable or useful for monitoring a subject and/or for determining sleep windows for the subject. The parameters may be physiological characteristics of the subject, including any of heart rate, heart rate variability, respiration rate, blood pressure, body temperature, stress levels, sweat levels. The parameters may also or alternatively relate to the movement, behavior and/or physical activity of the subject, including the level of alertness of the subject (e.g. while driving). The parameters may also or alternatively relate to the environment of the subject (for example in their bedroom), including any of, temperature and humidity. Any of the aforementioned parameters may be measured while the subject is awake, and/or while the subject is asleep. The parameters may also or alternatively relate to the sleep patterns and/or sleep quality of the subject. Suitable sensors include any one or more of: a heart rate sensor, a heart rate variability sensor, an electrocardiogram (ECG) sensor, an electroencephalogram (EEG) sensor, a photoplethysmogram (PPG) sensor, a respiration sensor, a blood pressure sensor, a body temperature sensor, a stress level sensor, a sweat level sensor, a skin conductivity sensor, an alertness sensor, a thermometer, a humidity sensor, an air pressure sensor, a carbon dioxide (CO₂) sensor, a functional near infrared spectroscopy (fNIR) sensor, a camera, a microphone, a movement sensor, an accelerometer, a radar sensor, a satellite positioning system (SPS) sensor, a gyroscope, etc.

Also as noted above, the one or more information collection units 6 can comprise one or more units or (e.g. software) modules that are able to interface with existing electronic or digital information relating to the subject, such as a calendar or diary that includes information about the subject's shift pattern(s), current sleep patterns, desired/required sleep patterns, family activities and/or social events. In addition or alternatively, the electronic or digital information relating to the subject can be input to the apparatus 4 manually by the subject, and one or more of the information collection units 6 can be formed accordingly to collect or request that information from the subject. In these embodiments, the user interface 14 of the apparatus 2 may be used to collect and/or request information from the subject.

The information about shift pattern(s) of the subject can include information indicating any of: a start time (including the day/date), end time (including the day/date) and duration of each shift. The information about current sleep patterns can include information indicating any of: when the subject gets into bed, when the subject falls asleep, when the subject wakes up, when the subject gets out of bed, and a subjective measure of the sleep quality (i.e. a measure of sleep quality provided by the subject). This information can be collected or provided for each day/sleep session. The information about desired/required sleep patterns can include information indicating any of: when the subject would like to get into bed, when the subject would like to fall asleep, when the subject would like to wake up, when the subject would like to get out of bed, etc. The information about family activities and/or social events can include scheduled activities, for example as noted in a diary or calendar (e.g. including a start day/time, a duration, and/or an end time), and/or indicating an amount of time in a day that the subject wishes to spend with family, socializing and/or doing a hobby/sport.

In some embodiments, the user interface 14 can enable the subject to input information indicating a preference or weighting for certain activities, such as family time, socializing, sleeping, etc. For example, the subject can input a preference or weighting to indicate that family time may be more important to them than additional sleep time or hobby time, or vice versa.

As noted above, according to the techniques described herein, a sleep schedule is determined by the apparatus 4 that includes at least two sleep windows in the day time before a night shift, in the day time after a night shift, or both (i.e. where the shift pattern includes night shifts on consecutive nights). For ease of explanation, the following description refers to two sleep windows in a particular day, but those skilled in the art will appreciate that the techniques can be readily extended to determining more than two sleep windows in a particular day. A first sleep window can be scheduled in the morning, after the preceding night shift ends (if applicable), and a second sleep window can be scheduled in the afternoon or the evening, preceding the next night shift (if applicable). The individual start/end timings of these two sleep windows can be adjusted to better fit, or optimally fit, the subject's family/social schedule, while maintaining a suitable total duration of sleep before and/or after a night shift. In this way the subject is able to get the required amount of sleep, and still participate in the personal activity/ies they have scheduled, or would like to do. Of course, this sleep schedule is determined to fit with the work schedule (shift working pattern). This sleep schedule can also be determined and/or apply to the next night shift, and also to upcoming future shift and non-shift work periods.

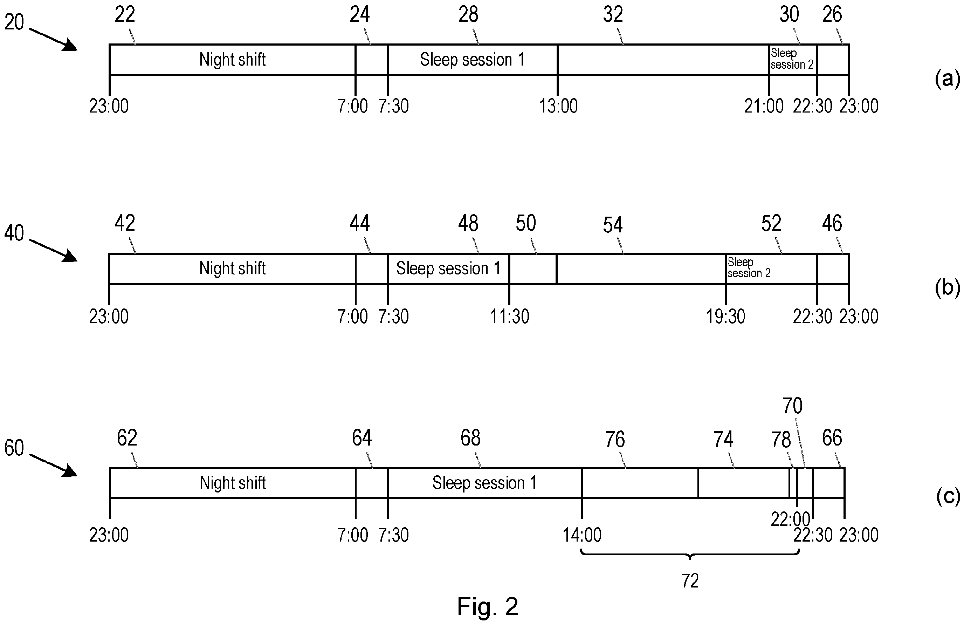

Fig. 2 illustrates three possible sleep schedules shown by a timeline covering a 24-hour period (2300 to 2300) that can be determined according to the techniques described herein for a night shift pattern with night shifts between 2300 and 0700, and a 30-minute commute before and after the night shift. Each sleep schedule includes two separate sleep windows between the night shifts.

A first sleep schedule 20 is shown in Fig. 2(a). This sleep schedule 20 can be determined when the subject does not have any specific personal activities they wish to undertake during the day before and/or during the day after a night shift. Thus, the sleep schedule 20 shows the preceding night shift 22, followed by the 30-minute commute 24, and the 30-minute commute 26 before the next night shift that starts at 2300. A first sleep window 28 is scheduled once the subject gets home and runs to 1300, so the first sleep window 28 has a duration of 5.5 hours. A second sleep window 30 is scheduled before the subject commutes to work and starts at 2100, so the second sleep window 30 has a duration of 1.5 hours. The first sleep window 28 and the second sleep window 30 therefore provide a total sleep time (TST) of 7 hours. Between the first sleep window 28 and the second sleep window 30 is a time window 32 in which the subject is free to undertake personal activities.

A second sleep schedule 40 is shown in Fig. 2(b). This sleep schedule 40 can be determined when the subject wishes to have lunch with their family between 1130 and 1300. Information indicating that the subject wishes to have lunch with their family between 1130 and 1300 can be input to the apparatus 4 or collected by the information collection units 6, and taken into account when determining the sleep schedule. Thus, the sleep schedule 40 shows the preceding night shift 42, followed by the 30-minute commute 44, and the 30-minute commute 46 before the next night shift that starts at 2300. A first sleep window 48 is scheduled once the subject gets home and is scheduled to end at 1130, so the first sleep window 28 has a duration of 4 hours. The first sleep window 48 ends when the 'lunch with family' is scheduled to start, as shown by time window 50. A second sleep window 52 is scheduled before the subject commutes to work and starts at 1930, so the second sleep window 30 has a duration of 3 hours. The first sleep window 48 and the second sleep window 52 therefore provide a TST of 7 hours. Between the 'lunch with family' window 50 and the second sleep window 52 is a time window 54 in which the subject is free to undertake other personal activities.

Thus, compared to the first sleep schedule 20, the apparatus 4 determines that the first sleep window 48 should be shortened to accommodate the subject's desire to have lunch with their family, with a corresponding lengthening of the second sleep window 52 (by scheduling the second sleep window 52 to start earlier than the second sleep window 30 in the first sleep schedule 20) so that the subject still achieves 7 hours of sleep between the consecutive night shifts.

A third sleep schedule 60 is shown in Fig. 2(c). This sleep schedule 60 can be determined when the subject wishes to spend time with their family before starting their night shift. Information indicating that the subject wishes to spend time with their family can be input to the apparatus 4 or collected by the information collection units 6, and taken into account when determining the sleep schedule. Thus, the third sleep schedule 60 shows the preceding night shift 62, followed by the 30-minute commute 64, and the 30-minute commute 66 before the next night shift that starts at 2300. A first sleep window 68 is scheduled once the subject gets home and is scheduled to end at 1400, so the first sleep window 68 has a duration of 6.5 hours. A second sleep window 70 is scheduled before the subject commutes to work and starts at 2200, so the second sleep window 70 has a duration of 0.5 hours. The first sleep window 68 and the second sleep window 70 therefore provide a TST of 7 hours. Between the first sleep window 68 and the second sleep window 70 is a time window 72 in which the subject is free to undertake personal activities. Within this time window 72, the time with family is scheduled (time window 74), with the subject having other parts 76, 78 of the time window 72 in which to undertake other personal activities.

Thus, compared to the first sleep schedule 20, the apparatus 4 determines that the first sleep window 68 should be lengthened to accommodate the subject's desire to spend time with their family later in the day, and which has the effect of shortening the time available for the second sleep window 70, but the subject is still able to achieve 7 hours of sleep before, after or between the night shifts.

In some embodiments, the apparatus 4 and processing unit 10 can implement a 'self-learning' process in which additional information is used to automatically adjust the proposed sleep window(s) in the sleep schedule. The processing unit 10 can start with a basic personalized preferred sleep schedule, for example based on preferences of the subject for when and how long each of the multiple sleep windows should be in the day, and then include or take into account more types of collected information to adjust the sleep schedule. The first sleep schedule 20 in Fig. 2(a) can be considered as a basic personalized sleep schedule. In some embodiments, weightings or preferences can be taken into account for the types of collected information or the collected information itself in determining the sleep schedule. The weightings or preferences can be static, e.g. input once by the subject, or dynamic.

Thus, one type of additional information can be the subject's priority in seeing family, socializing or taking part in a hobby/sport, or in furthering their career. Other additional information can indicate the times at which these are preferred, and this timing information can be obtained from a calendar, diary or electronic schedule for the subject. For example, the additional information can indicate that the subject would like to have lunch with family between 1130 and 1300, as in the exemplary second sleep schedule 40 above.

In addition or alternatively to the above, the processing unit 10 can determine a 'behavioral rhythm' of the subject over a preceding time period, e.g. over the past *m* days, or the past *n* weeks, and take this behavioural rhythm into account when determining the sleep schedule. This behavioural rhythm can be determined from the information obtained by the information collection units 6 and/or based on information input to the system 2 by the subject. The behavioural rhythm can relate to any of how much sleep the subject has had, at what times has the subject slept, how much sleep the subject needs, the times at which the subject has been at work, the times at which the subject spends time with family and/or does hobbies or sports, the level of restfulness on specific mornings, etc. This behavioural rhythm information can be used by the processing unit 10 to adjust the total sleep time for each day and/or to adjust the start and/or end times of the multiple sleep windows.

In addition or alternatively to the above, the processing unit 10 can take into account information indicating whether the subject is a 'morning person' or 'evening person', in the sense that they prefer to be awake in the mornings or evenings. For example, information indicating that the subject is a 'morning person' can be used to reduce the length of the first sleep window after the night shift so that the subject is awake earlier in the day, but to lengthen the second sleep window before the next night shift. As another example, information indicating that the subject is an 'evening person' can be used to reduce the length of the second sleep window before the next night shift so that the subject has more time awake later in the day, but to lengthen the first sleep window after the last night shift.

Before determining a sleep schedule, and/or after determining and implementing a sleep schedule, the apparatus 4/processing unit 10 can iterate towards an optimum sleep schedule for the subject, including an optimum sleep duration (TST) and sleep quality, over the course of several days by evaluating outcome measures relating to the subject's sleep while maximizing family/social/hobby/sport time. These outcome measures can include, e.g., sleep quality, sleep duration, reports provided by the subject about their sleep quality. These outcome measures can be determined from information collected by the information collection units 6. In some embodiments, sleep quality can be inferred, in part or in full, from information about the alertness of the subject during the day, during their night shift, and/or when driving a vehicle.

In determining the sleep schedule, the apparatus 4/processing unit 10 can determine the likelihoods of success for a range of potential sleep schedules, given factors such as past behavioural rhythms and/or whether the subject is a 'morning person' or 'evening person'. The apparatus 4/processing unit 10 can then propose the sleep schedule with the best chance of success (measured in terms of any of TST, sleep quality (either or both of objectively measured or subjectively judged), maximizing personal activity time, etc.). Thus, over time the apparatus 4/processing unit 10 will gradually optimize the sleep schedule determination process.

In some embodiments, when determining the sleep schedule and durations of the multiple sleep windows, the processing unit 10 can take into account a requirement or preference relating to a minimum duration of a sleep window, and/or a requirement or preference relating to a maximum duration of a sleep window. For example, the subject may indicate a minimum duration of a sleep window as 1 hour, and this can be taken into account when determining the sleep schedule. In another example, the subject may indicate a minimum duration of 15 minutes for a sleep window. In another example, the processing unit 10 can determine a minimum duration of a sleep window and/or a minimum TST based on monitoring the subject, including the sleep quality of the subject.

In some embodiments, the apparatus 4/processing unit 10 can analyze information collected by the information collection units 6 relating to a period in which the subject was supposed to sleep to determine the subject's alertness and residual sleepiness in relation to this sleep period. This analysis can be complemented with another assessment over a longer period after the subject wakes up. In this way there can be personalization of the sleep schedule for specific 'needs'. For example, if the apparatus 4/processing unit 10 determines that a subject is usually still tired after a period of 4.5 hours of sleep, but not after a period of 5 hours of sleep, the processing unit 10 can determine a sleep schedule including a sleep window with a duration of 5 hours instead of 4.5 hours. As another example, it is possible for the apparatus 4/processing unit 10 to determine over time that for this subject it is preferable/optimal to schedule three sleep windows rather than 2, for instance when the subject typically wakes up during one of the two previously-scheduled sleeping windows.

In some embodiments, the apparatus 4/processing unit 10 can take into account aspects such as the subject's subjective propensity to be able to fall asleep when determining the sleep schedule. Sleep pressure (which refers to the physiological pressure to sleep, which typically increases through the course of a day), can be subjectively estimated, and if an adaptation or change of the suggested sleep schedule is performed or required by the subject (e.g. due to wanting to undertake a particular activity), a visualization can be provided to the subject (for example by the user interface 14) showing what the likelihood of falling asleep is for the subject, and/or the likelihood of actually sleeping for the whole sleep window.

The sleep pressure can be estimated for certain moments of the day/night (including during the night shift), to assess whether or not the sleep pressure at those moments is too high, because the subject is likely to become drowsy or unintentionally fall asleep. The parameters (i.e. timing and/or duration of sleep windows) of the sleep schedule can be adjusted such that the predicted/estimated sleep pressure is acceptable at all times. For example, the start time of a sleep window(s) can be adjusted to coincide with a time in the day at which the estimated sleep pressure is high, and/or adjusted so that the sleep pressure is low during the next night shift. While sleep pressure itself is difficult to objectively determine, it is possible to quantify attention/cognition depletion as a derivative or function of sleep pressure. Sleep pressure could be determined by requiring the subject to perform an attention/cognition depletion test, or request the subject provide a subjective indication of their current sleepiness/drowsiness. In some embodiments, a sleep pressure model can be derived based on a series of these subjective indications from the subject, in conjunction with timing information such as the time since the subject woke up, the amount of sleep during a previous time period, etc.

In some embodiments, the apparatus 4/processing unit 10 can take into account when the subject is going to do physical activities when determining the sleep schedule, since physical activity is known to disrupt or delay sleep onset, and therefore scheduled physical activity can be taken into account in determining the sleep schedule.

As noted above, outcome measures relating to the subject's sleep can be evaluated, with these outcome measures including, e.g., sleep quality, sleep duration, reports provided by the subject about their sleep quality, etc. The outcome measures can further include indicators relating to specific sleep stages, e.g. 'light' sleep, 'deep' sleep, rapid eye movement (REM) sleep, etc. These outcome measures can be determined from information collected by the information collection units 6. In some embodiments, the outcome measures for one or more sleep windows in a particular day can be used to set or adjust the sleep schedule for the next and/or subsequent days. For example, if the outcome measure indicates that the sleep during the first sleep window in a first day was shorter than desired or required (e.g. the subject is more tired than expected after the scheduled first sleep window and/or the subject did not sleep for the full length of the scheduled first sleep window), the second sleep window on the first day may be lengthened to compensate for part of the missed/lost sleep (if possible, taking into account any personal activities the subject wishes to take part in), and the first sleep window for a subsequent day can be lengthened (e.g. by moving the start time of the first sleep window earlier and/or moving the end time of the first sleep window later) to compensate for this sleep deficit. As a particular example, the subject may have only slept for 75% of the first sleep window on the first day, and the second sleep window is increased by 12.5%, for example in view of the subject's personal activities. In this case, the length of the first sleep window on the next day can be increased by the remaining 12.5% to address the sleep deficit from the previous day.

In some embodiments, information about the subject can be determined from measurements by one or more sensors in the information collection units 6, and the duration, start time and/or end time of one or more scheduled sleep windows can be adjusted based on the measurements.

In a first example, measurements by one or more sensors in the information collection units 6 can be used to determine a measure of the alertness of the subject. If the measure of the alertness indicates that the subject is less alert and/or more tired than usual, the duration of any of the first sleep window, the second sleep window, and the first sleep window for the next day can be increased or extended. Extending the duration of the sleep window can be achieved by making the sleep window start earlier, and/or end later. In these embodiments, alertness can be measured using a camera that monitors the subject's face, and the images from the camera can be analyzed to determine the frequency that the subject's eyes blink (e.g. while driving a vehicle), and/or the duration of individual blinks. In these embodiments, the alertness can also or alternatively be measured by evaluating driving parameters, such as the variability of the speed of the vehicle, the position of the vehicle on the road and/or in a lane, etc. If the measure(s) of alertness indicate that the subject is more tired than usual (e.g. the frequency of eye blinking is below a threshold value, or the duration of blinks are above a threshold value), then the duration of any of the first sleep window, the second sleep window, the first sleep window for the next day can be increased or extended to compensate.

In a second example, measurements by one or more sensors in the information collection units 6 can be used to determine a measure of the stress level of the subject. If the measure of the stress level indicates that the subject is more stressed than usual, the duration of any of the first sleep window, the second sleep window, and the first sleep window for the next day can be increased or extended. In these embodiments, the subject's stress level can be measured using sensors that measure physiological characteristics, such as skin conductance, heart rate, heart rate variability, etc., and/or sensors that measure the subject's behavior. If the measure(s) of stress level indicate that the subject is more stressed than usual (e.g. the skin conductance is below a threshold value, or the heart rate is above a threshold value), then the duration of any of the first sleep window, the second sleep window, the first sleep window for the next day can be increased or extended to compensate and reduce the stress level of the subject.

In a third example, measurements by one or more sensors in the information collection units 6 can be used to assess the quality of the subject's sleep during a sleep window. For example the quality of the sleep can be inferred from a measure of heart rate of the subject by a heart rate sensor and/or a measure of the sleep duration (e.g. indicating whether the subject is awake and/or has woken up one or more times during the sleep window). If the sleep quality is below a threshold value and a minimum sleep duration has been met (e.g. indicating that the subject is sleeping poorly but has at least slept for a minimum amount), then the subject can be instructed or advised to get up, and the duration of the next sleep window (e.g. the second sleep window later in the day, or the first sleep window on the next day) can be extended to compensate for the poor quality sleep.

In a fourth example, measurements by one or more sensors in the information collection units 6 can be used to measure or assess the structure of the subject's sleep during a sleep window, e.g. measure or assess the amount and/or quality of deep sleep, light sleep and/or REM sleep, etc. If, for example, the duration of deep sleep in a sleep window is less than a threshold value, then the duration of the next sleep window can be increased or extended to compensate.

Once the sleep schedule is determined, the apparatus 4 can inform the subject of the sleep schedule. The apparatus 4 can provide information about the sleep schedule, or particular sleep windows, using the user interface 14. For example, the user interface 14 can display the determined sleep schedule, e.g. in a graphical form as shown in any of Figs. 2(a), (b) or (c). Alternatively the sleep schedule can be displayed in the form or a timetable or list of times at which sleep windows are scheduled. The processing unit 10 can control the user interface 14 to provide prompts or alarms to the subject to indicate the start and/or end of a sleep window, and/or prompts or alarms in advance of the start of a sleep window (e.g. 30 minutes before, or a subject-configurable time period before the start of a sleep window). In some embodiments, where the apparatus 4 is not a device typically worn or carried by the subject (e.g. where the apparatus 4 is not a smartphone or smartwatch), the apparatus 4 can transmit or otherwise communicate information about the determined sleep schedule to a device that is typically worn or carried by the subject, such as a smartphone or smartwatch.

In some embodiments, the apparatus 4 can provide additional feedback or instructions to the subject to enable or assist the subject to follow the determined sleep schedule. This additional feedback or instructions could comprise information highlighting the consequences of not sleeping at the proposed times, e.g. that the subject may feel drowsy at a particular time, the subject may have to sleep longer at another time when other/more important things are planned, etc.

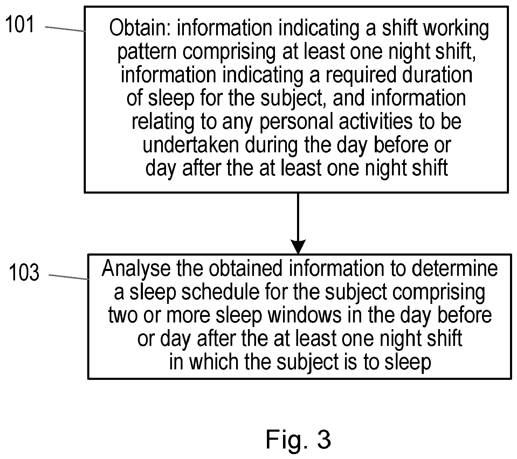

Fig. 3 is a flow chart illustrating a method according to embodiments of the techniques described herein. The method can be implemented by processing unit 10, for example by executing suitably configured computer-readable program code, or more generally by apparatus 4 or system.

Step 101 of the method comprises obtaining information. The information can indicate a shift working pattern for the subject. The shift working pattern comprises at least one night shift. The obtained information can also indicate a required duration of sleep for the subject, and any personal activities to be undertaken by the subject during the day before or day after the at least one night shift. The information relating to personal activities can be any one or more of: information identifying the personal activity, information identifying the type of personal activity (e.g. family activity, social, health/fitness, sport, hobby, etc.), and information indicating a start time, end time and/or duration of the personal activity.

Step 103 comprises analyzing the obtained information to determine a sleep schedule for the subject. The sleep schedule comprises two or more sleep windows in the day before or day after the at least one night shift in which the subject is to sleep. The two or more sleep windows are scheduled according to the required duration of sleep for the subject and according to any personal activities to be undertaken by the subject. Thus, in some embodiments, step 103 comprises determining a sleep schedule comprising two sleep windows. In alternative embodiments, step 103 comprises determining a sleep schedule comprising three or more sleep windows.

In some embodiments, step 101 comprises obtaining information on the duration of sleep for the subject on one or more days prior to the start of the shift working pattern. The required duration of sleep for the subject can be determined based on the duration of sleep for the subject on one or more days (e.g. 5 days) prior to the start of the shift working pattern. For example, the required duration of sleep for the subject can be determined based on the average duration of sleep for the subject across multiple (e.g. 5) days prior to the start of the shift working pattern. The required duration of sleep can be updated over time in case the total sleep time for the subject increases or decreases.

In some embodiments, the sleep schedule determined in step 103 can comprise a sleep window in the morning and a sleep window in the afternoon or evening. In some embodiments, the sleep window in the morning can be scheduled shortly after the end of a previous night shift, e.g. within 1 or 2 hours of the end of the night shift or arriving home from the end of the night shift. In some embodiments, the sleep window in the afternoon or evening can be scheduled to end shortly before the next night shift starts, e.g. within 1 or 2 hours of the start of the next night shift or needing to leave home before starting the night shift.

In some embodiments, the sleep window in the morning can have a longer duration than the sleep window in the afternoon or evening. For example, the sleep window in the morning can have a duration that is 70% to 85% of the required duration of sleep, with the sleep window in the afternoon or evening having a duration that is 15% to 30% of the required duration of sleep.

In some embodiments, step 103 comprises determining the sleep windows such that at least one of the sleep windows is longer than a minimum duration. For example, the minimum duration could be 30 minutes. In some embodiments, step 103 can comprise determining the sleep windows such that all of the sleep windows are longer than the minimum duration (e.g. 30 minutes). In some embodiments, step 103 comprises determining the sleep windows such that at least one, or all, of the sleep windows has a duration shorter than a maximum duration. The maximum duration may be an absolute value, e.g. 6 hours, 7 hours, etc., or the maximum duration may depend on the required duration of sleep, e.g. 75% of the required duration of sleep. In some embodiments, the shorter of the at least two sleep windows may be shorter than a short sleep window maximum value, for example 1 hour, or 30 minutes.

In some embodiments, step 103 comprises determining an initial sleep schedule. The initial sleep schedule comprises a first sleep window having a first start time and a first duration, and a second sleep window having a second start time and a second duration. The sum of the first duration and the second duration can be equal or approximately equal (e.g. within 5%) to the required amount of sleep indicated in the obtained information. Next, in step 103, it is determined if any personal activities to be undertaken by the subject coincide or partially coincide with a sleep window in the initial sleep schedule. This can be determined using the information relating to the personal activities obtained in step 101. If it is determined that any personal activity coincides or partially coincides with a sleep window, then an adjusted sleep schedule is determined taking into account this/these personal activities. In particular, an adjusted first sleep window can be determined having an adjusted first start time and/or an adjusted first duration to accommodate the personal activity, and/or an adjusted second sleep window can be determined having an adjusted second start time and/or an adjusted second duration to accommodate the personal activity. The adjustment(s) to the start time and/or duration are made such that the personal activity does not coincide or partially coincide with a sleep window in the adjusted sleep schedule. However, the sum of the durations of the sleep windows in the adjusted sleep schedule should still be equal or approximately equal (e.g. within 5%) to the required duration of sleep.

For example, referring again to Fig. 2, the sleep schedule 20 shown in Fig. 2(a) can be considered to be an initial sleep schedule, and the 'lunch with family' personal activity 50 in Fig. 2(b) would overlap or coincide with first sleep window 28 in Fig. 2(a), so the first sleep window 28 is shortened to first sleep window 48 to accommodate the personal activity 50, with the second sleep window 30 being lengthened to compensate and maintain the same, or generally the same, total amount of sleep.

In some embodiments, the method include further steps that can result in an adjustment to the duration of one or more sleep windows in the determined sleep schedule. In these embodiments, one or more measurements relating to the subject can be obtained from one or more sensors. The one or more measurements are analysed to determine information relating to any one or more of the alertness of the subject, a stress level of the subject and/or a sleep quality of the subject for a previous or ongoing sleep session. Based on the result of the analysis, it is determined whether to extend a duration of a sleep window in the determined sleep schedule. As set out in the examples above, alertness of the subject can be measured, and if the subject is determined to be less alert and/or more tired than usual, the duration of an upcoming sleep window can be extended. In another of the examples, a stress level of the subject can be measured, and if the subject is determined to be more stressed than usual, the duration of an upcoming sleep window can be extended. In the other examples, the duration of an upcoming sleep window can be extended based on an assessment of the sleep quality in a previous sleep session, or an ongoing sleep session.

Therefore, there is provided a technique for optimizing a total daily sleep duration and sleep quality for shift workers, while maximizing their involvement in a normal social and family life.

Variations to the disclosed embodiments can be understood and effected by those skilled in the art in practicing the principles and techniques described herein, from a study of the drawings, the disclosure and the appended claims. In the claims, the word "comprising" does not exclude other elements or steps, and the indefinite article "a" or "an" does not exclude a plurality. A single processor or other unit may fulfil the functions of several items recited in the claims. The mere fact that certain measures are recited in mutually different dependent claims does not indicate that a combination of these measures cannot be used to advantage. A computer program may be stored or distributed on a suitable medium, such as an optical storage medium or a solid-state medium supplied together with or as part of other hardware, but may also be distributed in other forms, such as via the Internet or other wired or wireless telecommunication systems. Any reference signs in the claims should not be construed as limiting the scope.

## Claims

1. A computer-implemented method for determining a sleep schedule (20; 40; 60) for a subject, the method comprising:
obtaining (101) information indicating a shift working pattern for the subject, the shift working pattern comprising at least one night shift, information indicating a required duration of sleep for the subject, and information relating to any personal activities to be undertaken by the subject during the day before or day after the at least one night shift; and
analyzing (103) the obtained information to determine a sleep schedule (20; 40; 60) for the subject, wherein the sleep schedule (20; 40; 60) comprises two or more sleep windows in the day before or day after the at least one night shift in which the subject is to sleep, wherein the two or more sleep windows are scheduled according to the required duration of sleep for the subject and according to any personal activities to be undertaken by the subject.

2. A method as claimed in claim 1, wherein the step of obtaining (101) information indicating the required duration of sleep for the subject comprises:
obtaining information on the duration of sleep for the subject on one or more days prior to the start of the shift working pattern; and
determining the required duration of sleep for the subject based on the duration of sleep for the subject on one or more days prior to the start of the shift working pattern.

3. A method as claimed in claim 1 or 2, wherein the sleep schedule (20; 40; 60) comprises a sleep window in the morning and a sleep window in the afternoon or evening, wherein the sleep window in the morning has a longer duration than the sleep window in the afternoon or evening.

4. A method as claimed in any of claims 1-3, wherein a duration of a first sleep window in the two or more sleep windows and/or a duration of a second sleep window in the two or more sleep windows is longer than a minimum duration.

5. A method as claimed in any of claims 1-4, wherein a duration of a first sleep window in the two or more sleep windows and/or a duration of a second sleep window in the two or more sleep windows is shorter than a maximum duration.

6. A method as claimed in any of claims 1-5, wherein the step of analyzing (103) the obtained information comprises:
determining an initial sleep schedule comprising a first sleep window having a first start time and a first duration, and a second sleep window having a second start time and a second duration, wherein the sum of the first duration and the second duration is equal or approximately equal to the required amount of sleep indicated in the obtained information;
determining if any personal activities to be undertaken by the subject coincide or partially coincide with a sleep window in the initial sleep schedule; and
if any personal activity coincides or partially coincides with a sleep window, determining an adjusted sleep schedule comprising:
an adjusted first sleep window having an adjusted first start time and/or an adjusted first duration; and/or
an adjusted second sleep window having an adjusted second start time and/or an adjusted second duration,
such that the personal activity does not coincide or partially coincide with a sleep window in the adjusted sleep schedule, wherein the sum of the durations of the sleep windows in the adjusted sleep schedule is equal or approximately equal to the required duration of sleep.

7. A method as claimed in any of claims 1-6, wherein the method further comprises:
obtaining one or more measurements relating to the subject from one or more sensors;
analyzing the one or more measurements to determine information relating to any one or more of: the alertness of the subject, a stress level of the subject and/or a sleep quality of the subject for a previous or ongoing sleep session; and
determining whether to extend a duration of a sleep window in the determined sleep schedule (20; 40; 60) based on the result of the analyzing.

8. A computer program product comprising a computer readable medium having computer readable code embodied therein, the computer readable code being configured such that, on execution by a suitable computer or processor, the computer or processor is caused to perform the method of any of claims 1-7.

9. An apparatus (4) configured to determine a sleep schedule (20; 40; 60) for a subject, the apparatus (4) comprising a processing unit (10) that is configured to:
obtain information indicating a shift working pattern for the subject, the shift working pattern comprising at least one night shift, information indicating a required duration of sleep for the subject, and information relating to any personal activities to be undertaken by the subject during the day before or day after the at least one night shift; and
analyze the obtained information to determine a sleep schedule (20; 40; 60) for the subject, wherein the sleep schedule (20; 40; 60) comprises two or more sleep windows in the day before or day after the at least one night shift in which the subject is to sleep, wherein the two or more sleep windows are scheduled according to the required duration of sleep for the subject and according to any personal activities to be undertaken by the subject.

10. An apparatus (4) as claimed in claim 9, wherein the processing unit (10) is configured to obtain the information indicating the required duration of sleep for the subject by:
obtaining information on the duration of sleep for the subject on one or more days prior to the start of the shift working pattern; and
determining the required duration of sleep for the subject based on the duration of sleep for the subject on one or more days prior to the start of the shift working pattern.

11. An apparatus (4) as claimed in claim 9 or 10, wherein the sleep schedule (20; 40; 60) comprises a sleep window in the morning and a sleep window in the afternoon or evening, wherein the sleep window in the morning has a longer duration than the sleep window in the afternoon or evening.

12. An apparatus (4) as claimed in any of claims 9-11, wherein a duration of a first sleep window in the two or more sleep windows and/or a duration of a second sleep window in the two or more sleep windows is longer than a minimum duration.

13. An apparatus (4) as claimed in any of claims 9-12, wherein a duration of a first sleep window in the two or more sleep windows and/or a duration of a second sleep window in the two or more sleep windows is shorter than a maximum duration.

14. An apparatus (4) as claimed in any of claims 9-13, wherein the processing unit (10) is configured to analyze the obtained information by:
determining an initial sleep schedule comprising a first sleep window having a first start time and a first duration, and a second sleep window having a second start time and a second duration, wherein the sum of the first duration and the second duration is equal or approximately equal to the required amount of sleep indicated in the obtained information;
determining if any personal activities to be undertaken by the subject coincide or partially coincide with a sleep window in the initial sleep schedule; and
if any personal activity coincides or partially coincides with a sleep window, determining an adjusted sleep schedule comprising:
an adjusted first sleep window having an adjusted first start time and/or an adjusted first duration; and/or
an adjusted second sleep window having an adjusted second start time and/or an adjusted second duration,
such that the personal activity does not coincide or partially coincide with a sleep window in the adjusted sleep schedule, wherein the sum of the durations of the sleep windows in the adjusted sleep schedule is equal or approximately equal to the required duration of sleep.

15. An apparatus (4) as claimed in any of claims 9-14, wherein the processing unit (10) is further configured to:
receive one or more measurements relating to the subject from one or more sensors;
analyze the one or more measurements to determine information relating to any one or more of: the alertness of the subject, a stress level of the subject and/or a sleep quality of the subject for a previous or ongoing sleep session; and
determine whether to extend a duration of a sleep window in the determined sleep schedule (20; 40; 60) based on the result of the analyzing.
